# EUROPEAN PATENT APPLICATION

(11) **EP 4 169 793 A1**
(43) Date of publication of application: **26.04.2023**
(21) Application number: 21203370.8
(22) Date of filing: 19.10.2021
(51) Int. Cl.: B60W 40/068, B60T 8/00, B60C 23/00

(54) **METHOD FOR ESTIMATING A ROAD FRICTION OF A ROAD SURFACE ON A TIRE OF A VEHICLE, COMPUTER PROGRAM, CONTROL UNIT AND VEHICLE**

(71) Applicant: VOLVO TRUCK CORPORATION, 405 08 Göteborg (SE)
(72) Inventor: SUBRAMANIAN, Chidambaram, 27407 NC, Greensboro (US)
(74) Representative: Germain Maureau

(57) **Abstract**

The present invention relates to a method (100) for estimating a friction between a road surface and a tire of a steered wheel of a vehicle, the steered wheel being fit with dynamic steeing, the vehicle comprising a steering wheel and a set of sensors comprising wheel end sensors and steering wheel sensors configured to measure signals corresponding to a set of parameters (SP), said signals corresponding respectively to wheel end parameters (WEP) of the steered wheel, and to steering wheel parameters (SWP) , the steering wheel parameters (SWP) comprising at least a steering wheel torque (SWTMz) and a steering wheel angle (SWA), the vehicle further comprising an electronic control unit (ECU) connected to a communication bus (CB) configured to convey to the electronic control unit (ECU) said signals corresponding to the set of parameters (SP), the electronic control unit (ECU) being configured to run a signal processing module (SPM), and a wheel end friction estimation model (FEM), the method (100) comprising the following steps implemented by the electronic control unit (ECU) :
- collect (101) the signals, corresponding to the set of parameters (SP), measured by the sensors during a period of time;
- process (102), by the signal processing module (SPM), the signals collected to provide processed signal data (PSD)
- provide (103) the processed signal data (PSD) as input to the wheel end friction estimation model (FEM), the wheel end friction estimation model (FEM) being configured to output a friction estimation (FE) of the friction between the road surface and the tire of the wheel.

The invention further relates to a corresponding computer program, control unit and vehicle.

## Description

### TECHNICAL FIELD OF THE INVENTION

This invention relates to the field of estimating a road friction of a road surface on a tire of a vehicle.

### BACKGROUND

At present, there are multiple ways to determine the friction using analytical approach and data driven approach. But existing methods are based on data from the vehicle system, using state estimation from vehicle level, such as the yaw rate and lateral acceleration from the vehicle.

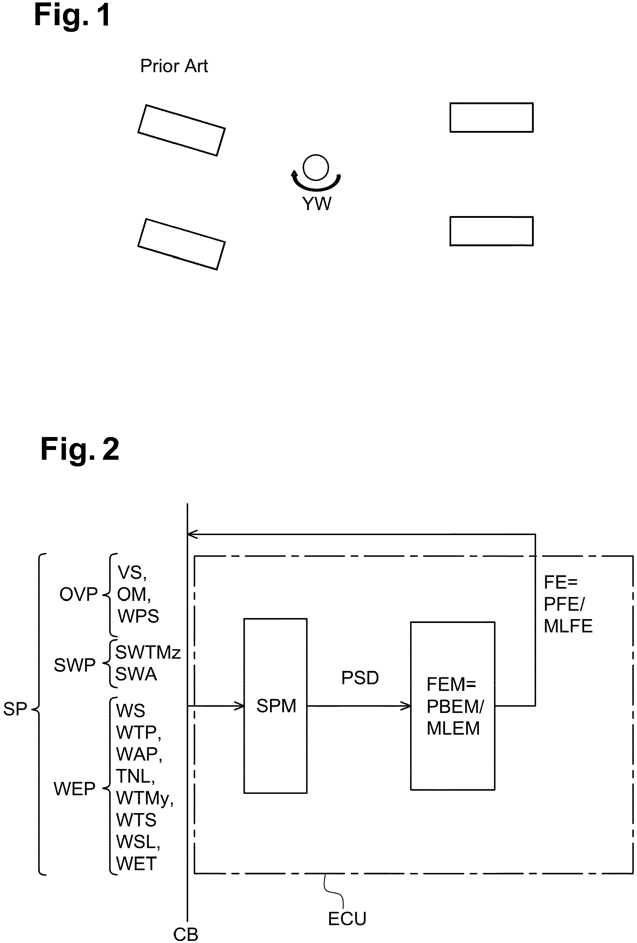

In the prior art, as illustrated schematically by figure 1, an estimation of friction between a vehicle and the road surface is based on a measurement of the vehicle yaw YW and of its temporal derivatives, considering that the yaw YW is a function of vehicle dynamic state parameters and of said friction. Therefore, in the prior art, complete vehicle state estimation is needed to predict the friction. This provides an average friction under wheels of the vehicle using inertial measurement units (IMU) of the vehicle. Such an estimation assumes only ideal conditions, such as no baked angles, etc...

There is a need for a method, which is not based on the vehicle behavior, to obtain friction on each tire end that is steerable and that is installed with a dynamic steering motor. The prior art gets the friction of a simple surface, and will not work on a split mue surface and in non ideal conditions like banked road, or will not be so accurate under all tires. There is a need to be more accurate on each tire that is steerable and has dynamic steering installed.

### SUMMARY OF THE INVENTION

To that end, the present invention provides a method for estimating a friction between a road surface and a tire of a steered wheel of a vehicle, the steered wheel being fit with dynamic steeing, the vehicle comprising a steering wheel and a set of sensors comprising wheel end sensors and steering wheel sensors configured to measure signals corresponding to a set of parameters, said signals corresponding respectively to wheel end parameters of the steered wheel, and to steering wheel parameters, the steering wheel parameters comprising at least a steering wheel torque and a steering wheel angle, the vehicle further comprising an electronic control unit connected to a communication bus configured to convey to the electronic control unit said signals corresponding to the set of parameters, the electronic control unit being configured to run a signal processing module, and a wheel end friction estimation model, the method comprising the following steps implemented by the electronic control unit:
- collect the signals, corresponding to the set of parameters, measured by the sensors during a period of time;
- process, by the signal processing module, the signals collected to provide processed signal data;
- provide the processed signal data as input to the wheel end friction estimation model, the wheel end friction estimation model being configured to output a friction estimation of the friction between the road surface and the tire of the wheel.

According to these provisions, the friction estimation is estimated independently for each steered wheel of the vehicle, said steered wheel being fit with dynamic steering, based on signals corresponding to wheel end parameters of each steered wheel.

According to an embodiment, each wheel of the vehicle is provided with the set of sensors required for providing the signals corresponding to the wheel end parameters relative to each wheel of the vehicle, and the method is performed independently for each wheel of the vehicle.

According to an embodiment, the method is iterated periodically.

According to an embodiment, the invention comprises one or more of the following features, alone or in any combination technically compatible.

According to an embodiment, the steering wheel torque is measured by a dynamic steering motor.

According to an embodiment, the processing step comprises removing noise from the signals measured during the period of time and/or a transformation in a frequency domain of the signals measured during the period of time.

According to an embodiment, the wheel end friction estimation model is a physics-based friction estimation model and wherein the wheel end parameters comprise a wheel end speed, a wheel end tire pressure, a wheel end alignment parameter, a wheel end tire normal load, a wheel end torque, a wheel end tire size, and wherein in the step of providing the processed signal data as input to the wheel end friction estimation model, the wheel end friction estimation model is configured to output a physics-based friction estimation of the friction between the road surface and the tire of the wheel.

According to an embodiment, the wheel end friction estimation model is a machine learning friction estimation model, and wherein the set of sensors comprises other vehicle sensors configured to measure signals corresponding to other vehicle parameters, the other vehicle parameters comprising a vehicle speed, and wherein the wheel end parameters comprise a wheel end speed, a wheel end tire pressure, a wheel end alignment parameter, a wheel end tire normal load, a wheel end torque, a wheel end tire size, and wherein in the step of providing the processed signal data as input to the wheel end friction estimation model, the wheel end friction estimation model is configured to output a machine learning friction estimation of the friction between the road surface and the tire of the wheel

According to an embodiment, the machine learning estimation model is a neuronal network trained to provide the friction estimation based on the processed signal data.

According to an embodiment, the neuronal network is a recurrent neuronal network.

According to an embodiment, the wheel end speed comprise a rotation speed around an axis of the wheel, and a linear speed of the rotation centre of the wheel.

According to an embodiment, the wheel end torque is a traction torque or a brake torque.

According to an embodiment, the wheel end parameters further comprise a wheel end sound level measured by a microphone sensor placed on the wheel and/or a wheel end temperature measured by a temperature sensor placed on the wheel.

According to these provisions, the accuracy of the friction estimation is better.

According to an embodiment, the other vehicle parameters further comprise at least one of an off-road mode and a wiper status.

According to an embodiment, the wheel end friction estimation model comprises the physics-based friction estimation model and the machine learning friction estimation model, and wherein the step of providing the processed signal data as input to the wheel end friction estimation model is performed with the physics-based friction estimation model to provide the physics-based friction estimation and the step of providing the processed signal data as input to the wheel end friction estimation model is further performed with the machine learning friction estimation model to provide the machine learning friction estimation, and wherein the friction estimation is a combination of the physics-based friction estimation and of the machine learning friction estimation.

According to these provisions, the best of each friction estimation model is obtained.

According to an embodiment, the method further comprises a step of communication of the friction estimation to other electronic control units of the vehicle through the communication bus.

According to an embodiment the communication bus is a CAN Bus.

According to an embodiment, the method further comprises a step of verification implemented before the step of communication of the friction estimation to other electronic control units.

According to an embodiment, the step of verification comprises comparing the friction estimation to a predetermined value based on the wiper status parameter. According to an embodiment, the step of verification is based on another friction estimation obtained from an Electronic Braking System Control Unit of the vehicle, and/or from an Engine Electronic control Unit of the vehicle, the step of verification resulting in a consolidated friction estimation which is further communicated to other electronic control units of the vehicle through the communication bus.

According to an aspect, the invention provides a computer program comprising a set of instructions executable on a computer or a processing unit, the set of instructions being configured to implement the method according to anyone of the embodiments described herein above, when the instructions are executed by the computer or the processing unit.

According to a further aspect, the invention provides an electronic control unit installed on a vehicle, the electronic control unit being configured to communicate with a communication bus of the vehicle so as to collect during a period of time signals time series corresponding to a set of parameters, said signals corresponding respectively at least to wheel end parameters relative to at least one wheel of the vehicle and to steering wheel parameters relative to a steering system of the vehicle, the electronic control unit further comprising a processing unit and a memory unit, the memory unit comprising the computer program as described herein above, and the electronic control unit being further configured to run a signal processing module, and a wheel end friction estimation model when the processing unit executes said computer program, the wheel end friction estimation model being configured to output a wheel end friction estimation, the wheel end friction estimation being at least one of a physics-based friction estimation, a machine learning friction estimation, a combination of a physics-based friction estimation and a machine learning friction estimation, of the friction between the road surface and the tire of the wheel.

According to a further aspect, the invention provides a vehicle comprising an electronic control unit according to the above.

### BRIEF DESCRIPTION OF THE DRAWINGS

The foregoing and other purposes, features, aspects and advantages of the invention will become apparent from the following detailed description of embodiments, given by way of illustration and not limitation with reference to the accompanying drawings, in which the same reference refer to similar elements or to elements having similar functions, and in which:
[Fig. 1] represents schematically a vehicle in the prior art.
[Fig. 2] represents schematically the main components of a vehicle involved in the implementation of the method according to an embodiment of the invention.
[Fig. 3] represents the sequence diagram of the steps of the method according to an embodiment of the invention.
[Fig. 4] represents the friction estimation according to the inputs of the friction estimation models.

### DETAILED DESCRIPTION OF THE INVENTION ACCORDING TO AN EMBODIMENT

According to an embodiment of the invention, as illustrated in figure 2, the vehicle considered comprises at least a steering wheel and a set of sensors such as wheel end sensors and steering wheel sensors; the wheel end sensors are provided to measure signals corresponding to a set of parameters SP corresponding to wheel end parameters WEP; wheel end parameters are parameters relative to a specific wheel of the vehicle.

The steering wheel sensors are provided to measure signals corresponding other parameter of the set of parameters SP, typically to steering wheel parameters SWP, comprising at least a steering wheel torque SWTMz, and a steering wheel angle SWA. The steering wheel torque SWTMz is typically measured using a dynamic steering motor from an electronic steering assistance system. The vehicle further comprises an electronic control unit ECU connected to a communication bus CB, said communication bus being configured to convey to the electronic control unit ECU said signals corresponding to the set of parameters SP. The communication bus is a for example a standard CAN Bus.

The electronic control unit ECU is further configured to run a signal processing module SPM, and a wheel end friction estimation model FEM.

As indicated previously, the wheel end parameters WEP comprise parameters relative to a specific wheel of the vehicle. For instance, the wheel end parameters WEP comprise a wheel end speed WS, a wheel end tire pressure WTP, a wheel end alignment parameter WAP, a wheel end tire normal load TNL, a wheel end torque WTMy, a wheel end tire size WTS.

The wheel end speed WS typically comprises a rotation speed around an axis of the wheel, and a linear speed of the rotation center of the wheel.

The wheel end torque WTMy is typically a traction torque or a brake torque.

In a particular embodiment of the invention, the wheel end parameters WEP may further comprise a wheel end sound level WSL measured by a microphone placed on the wheel and/or a wheel end temperature WET measured by a temperature sensor placed on the wheel.

According to an embodiment of the invention, each wheel of the vehicle is provided with the set of sensors required to provide the signals corresponding to the wheel end parameters WEP relative to each wheel.

In a more particular embodiment of the invention, the set of sensors comprises other vehicle sensors configured to measure signals corresponding to other vehicle parameters OVP, the other vehicle parameters OVP comprising for instance a vehicle speed VS; the other vehicle parameters OVP may further comprise at least one of an off-road mode OM and a wiper status WPS. Off road mode is typically defined by a switch in the dashboard of the vehicle, intended to be switched on by the driver while driving in off-road conditions to optimize several parameters in several electronic control units to change the dynamics to suit best on off road terrains.

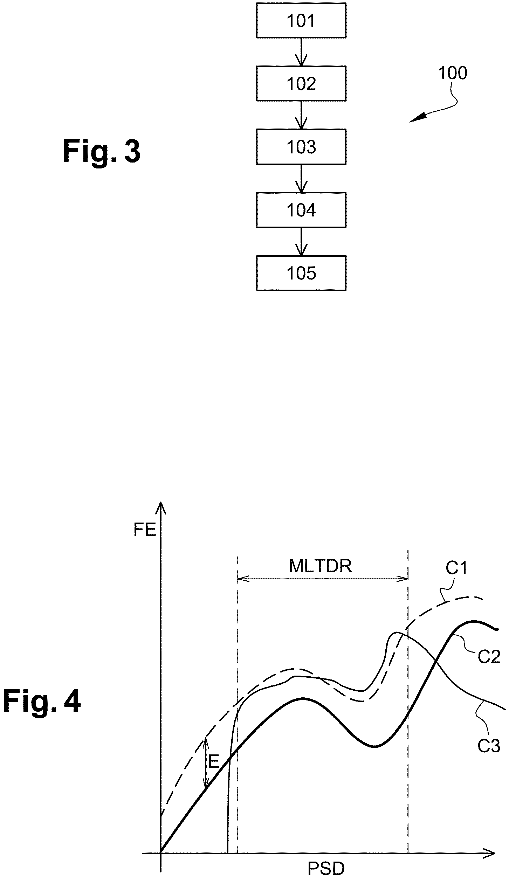

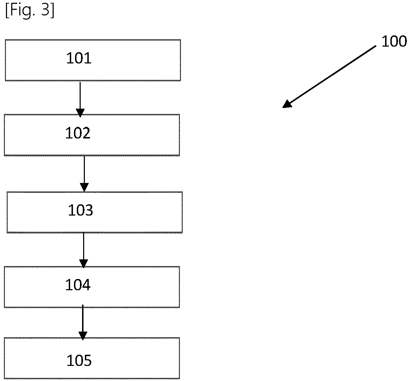

The method 100 will now be described in reference to figure 3. It comprises the following steps implemented by the electronic control unit ECU:
- collect 101 the signals, corresponding to the set of parameters SP, measured by the sensors during a period of time;
- process 102, by the signal processing module SPM, the signals collected to provide processed signal data PSD; the processing step 102 typically comprises removing noise from the signals measured during the period of time and/or a transformation in a frequency domain of the signals measured during the period of time; the transformation may for example be a Fourier transformation of the signal;
- provide 103 the processed signal data PSD as input to the wheel end friction estimation model FEM, the wheel end friction estimation model FEM being configured to output a friction estimation FE of the friction between the road surface and the tire of the wheel.

According to these provisions, the friction estimation is estimated independently for each wheel of the vehicle, based on signals correponding to wheel end parameters.

According to an embodiment, the method 100 is performed independently for each steered wheel of the vehicle, the steered wheel being fit with dynamic steering.

The steps of method 100 may for example be iterated periodically to update periodically the friction estimation FE

In particular, the wheel end friction estimation model FEM may be a physics-based friction estimation model PBEM, wherein the wheel end parameters WEP comprise a wheel end speed WS, a wheel end tire pressure WTP, a wheel end alignment parameter WAP, a wheel end tire normal load TNL, a wheel end torque WTMy, a wheel end tire size WTS. Thus the wheel end friction estimation model FEM outputs a physics-based friction estimation PFE of the friction between the road surface and the tire of the wheel of the vehicle.

More particularly, the wheel end friction estimation model FEM is a machine learning friction estimation model MLEM, wherein the wheel end parameters WEP comprise a wheel end speed WS, a wheel end tire pressure WTP, a wheel end alignment parameter WAP, a wheel end tire normal load TNL, a wheel end torque WTMy, a wheel end tire size WTS, and wherein the set of sensors comprise other vehicle sensors such as a vehicle speed VS. Thus the wheel end friction estimation model FEM outputs a wheel end machine learning friction estimation MLFE of the friction between the road surface and the tire of the wheel of the vehicle.

Even more particularly, the other vehicle sensors may comprise sensors configured to provide at least one of an off-road mode OM and a wiper status WPS. According to these provisions the accuracy of the wheel end machine learning friction estimation is improved.

In a particular embodiment of the invention, wherein the wheel end friction estimation model FEM is a machine learning friction estimation model MLEM, and wherein the wheel end parameters WEP comprise a wheel end speed WS, a wheel end tire pressure WTP, a wheel end alignment parameter WAP, a wheel end tire normal load TNL, a wheel end torque WTMy, a wheel end tire size WTS, with other vehicle sensors such as a vehicle speed VS, the wheel end parameters WEP may further comprise a wheel end sound level WSL measured by a microphone placed on the wheel and a wheel end temperature WET measured by a temperature sensor placed on the wheel. According to these provisions the accuracy of the wheel end machine learning friction estimation is further improved.

Typically, the machine learning estimation model is a neuronal network trained to provide the friction estimation MLFE based on the processed signal data PSD. Preferably, the neuronal network is a recurrent neuronal network.

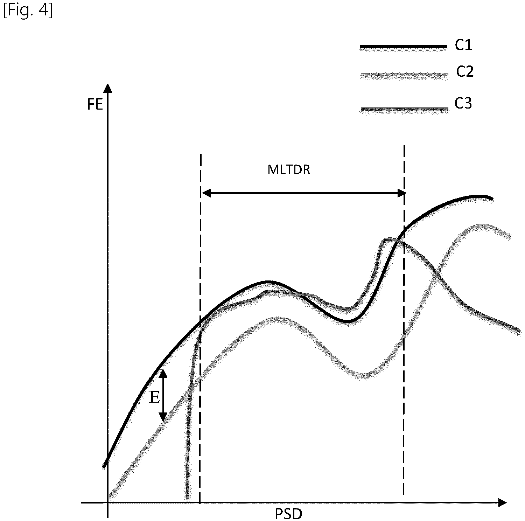

In figure 4, three curves are represented. One curve C1 represents the real values of the friction FE as a function of the processed signal data PSD derived from the measured signals corresponding to the set of parameters. Another curve C2 represents the physics-based friction estimation PFE as a function of the processed signal data PSD input into the physics based friction estimation model. Another curve C3 represents the machine-learning friction estimation MLFE as a function of the processed signal data PSD input into the machine learning friction estimation model MLEM.

As observed in the curves of figure 4, and by comparison with the curve C1 the representing the real values of the friction FE, the curve C3 shows that the machine learning friction estimation model MLEM has very good accuracy provided that the input is within a range MLTDR corresponding to the test data used as inputs during the training phase of the machine learning friction estimation model MLEM; the curve C3 further shows that the machine learning friction estimation model MLEM has very poor accuracy outside the range MLTDR corresponding to the test data used as inputs during the training phase of the machine learning friction estimation model MLEM. The curve C2 shows that the physics based approach will have a steady error E, since all properties are hard to be modelled by equations.

Using a physics based approach combined with a machine learning approach uses the best of both. Thus, according to an embodiment of the invention, the wheel end friction estimation model FEM comprises the physics-based friction estimation model PBEM and the machine learning friction estimation model MLEM, and the step of providing 103 the processed signal data PSD as input to the wheel end friction estimation model FEM is performed with the physics-based friction estimation model PBEM to provide the physics-based friction estimation PFE as described above and the step of providing 103 the processed signal data PSD as input to the wheel end friction estimation model FEM is further performed with the machine learning friction estimation model MLEM to provide the machine learning friction estimation MLFE as described above; and the friction estimation FE is a combination of the physics-based friction estimation PFE and of the machine learning friction estimation MLFE.

According to these provisions, the best of each friction estimation model is obtained.

The friction estimation FE estimated as indicated above can be communicated in a further step of communication 105 to other electronic control units of the vehicle, through the communication bus. Thus, the other electronic control units, such a suspension electronic control unit or a braking and transmission electronic control unit may modify for example an active suspension rate for ride comfort, based on the friction estimation, or the desired slip to match a peak longitudinal force, based on the friction estimation.

Before sending the friction estimation to other electronic control units of the vehicle, some verification step 104 may be provided with the method 100. For instance, if the estimated friction is low Mu, and if the wiper status indicates the wiper is turned on for more than 10 secs, the method will check at a next braking event to estimate the friction from the braking electronic control unit; or the method will similarly request from an engine electronic unit to predict another friction estimation, and finally compare all these friction estimation to provide a feedback on whether the friction estimation provided by the method 100 is correct or not.

According to an aspect, the invention relates to a computer program comprising a set of instructions executable on a computer or a processing unit, the set of instructions being configured to implement the method 100 according to anyone of the embodiments described herein above, when the instructions are executed by the computer or the processing unit.

According to another aspect, the invention relates to an electronic control unit ECU configured to communicate with a communication bus CB of a vehicle so as to collect during a period of time signals SD time series corresponding to a set of parameters SP, said signals corresponding respectively at least to wheel end parameters WEP relative to at least one wheel of the vehicle and to steering wheel parameters SWP relative to a steering system of the vehicle, the electronic control unit ECU further comprising a processing unit and a memory unit, the memory unit comprising the computer program according to the above and the electronic control unit ECU being further configured to run a signal processing module SPM, and a wheel end friction estimation model FEM when the processing unit executes said computer program.

According to another aspect, the invention relates to a vehicle comprising an electronic control unit ECU according to the above.

## Claims

1. Method (100) for estimating a friction between a road surface and a tire of a steered wheel of a vehicle, the steered wheel being fit with dynamic steeing, the vehicle comprising a steering wheel and a set of sensors comprising wheel end sensors and steering wheel sensors configured to measure signals corresponding to a set of parameters (SP), said signals corresponding respectively to wheel end parameters (WEP) of the steered wheel, and to steering wheel parameters (SWP) , the steering wheel parameters (SWP) comprising at least a steering wheel torque (SWTMz) and a steering wheel angle (SWA), the vehicle further comprising an electronic control unit (ECU) connected to a communication bus (CB) configured to convey to the electronic control unit (ECU) said signals corresponding to the set of parameters (SP), the electronic control unit (ECU) being configured to run a signal processing module (SPM), and a wheel end friction estimation model (FEM), the method (100) comprising the following steps implemented by the electronic control unit (ECU) :
- collect (101) the signals, corresponding to the set of parameters (SP), measured by the sensors during a period of time;
- process (102), by the signal processing module (SPM), the signals collected to provide processed signal data (PSD)
- provide (103) the processed signal data (PSD) as input to the wheel end friction estimation model (FEM), the wheel end friction estimation model (FEM) being configured to output a friction estimation (FE) of the friction between the road surface and the tire of the wheel.

2. Method (100) according to claim 1, wherein the steering wheel torque (SWTMz) is measured by a dynamic steering motor.

3. Method (100) according to anyone of claims 1 or 2 wherein the processing step comprises removing noise from the signals measured during the period of time and/or a transformation in a frequency domain of the signals measured during the period of time.

4. Method (100) according to anyone of claims 1 to 3, wherein the wheel end friction estimation model (FEM) is a physics-based friction estimation model (PBEM) and wherein the wheel end parameters (WEP) comprise a wheel end speed (WS), a wheel end tire pressure (WTP), a wheel end alignment parameter (WAP), a wheel end tire normal load (TNL), a wheel end torque (WTMy), a wheel end tire size (WTS), and wherein in the step of providing (103) the processed signal data (PSD) as input to the wheel end friction estimation model (FEM), the wheel end friction estimation model (FEM) is configured to output a physics-based friction estimation (PFE) of the friction between the road surface and the tire of the wheel.

5. Method (100) according to anyone of claims 1 to 4, wherein the wheel end friction estimation model (FEM) is a machine learning friction estimation model (MLEM), and wherein the set of sensors comprises other vehicle sensors configured to measure signals corresponding to other vehicle parameters (OVP), the other vehicle parameters (OVP) comprising a vehicle speed (VS), and wherein the wheel end parameters (WEP) comprise a wheel end speed (WS), a wheel end tire pressure (WTP), a wheel end alignment parameter (WAP), a wheel end tire normal load (TNL), a wheel end torque (WTMy), a wheel end tire size (WTS), and wherein in the step of providing (103) the processed signal data (PSD) as input to the wheel end friction estimation model (FEM), the wheel end friction estimation model (FEM) is configured to output a machine learning friction estimation (MLFE) of the friction between the road surface and the tire of the wheel

6. Method (100) according to claim 5, wherein the wheel end parameters (WEP) further comprise a wheel end sound level (WSL) measured by a microphone sensor placed on the wheel and/or a wheel end temperature (WET) measured by a temperature sensor placed on the wheel.

7. Method (100) according to anyone of claims 5 or 6, wherein the other vehicle parameters (OVP) further comprise at least one of an off-road mode (OM) and a wiper status (WPS).

8. Method (100) according to anyone of claims 4 to 7, wherein the wheel end friction estimation model comprises the physics-based friction estimation model (PBEM) and the machine learning friction estimation model (MLEM), and wherein the step of providing (103) the processed signal data (PSD) as input to the wheel end friction estimation model (FEM) is performed with the physics-based friction estimation model (PBEM) to provide the physics-based friction estimation (PFE) according to claim 4 and the step of providing (103) the processed signal data (PSD) as input to the wheel end friction estimation model (FEM) is further performed with the machine learning friction estimation model (MLEM) to provide the machine learning friction estimation (MLFE) according to anyone of claims 5 to 7, and wherein the friction estimation (FE) is a combination of the physics-based friction estimation (PFE) and of the machine learning friction estimation (MLFE).

9. Method (100) according to anyone of previous claims, further comprising a step of communication (105) of the friction estimation (FE) to other electronic control units of the vehicle through the communication bus.

10. Method (100) according anyone of previous claims, further comprising a step of verification (104) implemented before the step of communication (105) of the friction estimation (FE) to other electronic control units.

11. Method (100) according anyone of previous claims, wherein the step of verification (104) is based on another friction estimation obtained from an Electronic Braking System Control Unit of the vehicle, and/or from an Engine Electronic control Unit of the vehicle, the step of verification resulting in a consolidated friction estimation which is further communicated to other electronic control units of the vehicle through the communication bus.

12. Computer program comprising a set of instructions executable on a computer or a processing unit, the set of instructions being configured to implement the method (100) according to anyone of claims 1 to 11, when the instructions are executed by the computer or the processing unit.

13. Electronic control unit (ECU) installed on a vehicle, the electronic control unit (ECU) being configured to communicate with a communication bus (CB) of the vehicle so as to collect during a period of time signals (SD) time series corresponding to a set of parameters (SP), said signals corresponding respectively at least to wheel end parameters (WEP) relative to at least one wheel of the vehicle and to steering wheel parameters (SWP) relative to a steering system of the vehicle, the electronic control unit (ECU) further comprising a processing unit and a memory unit, the memory unit comprising the computer program according to claim 12 and the electronic control unit (ECU) being further configured to run a signal processing module (SPM), and a wheel end friction estimation model (FEM) when the processing unit executes said computer program, the wheel end friction estimation model (FEM) being configured to output a friction estimation (FE), the friction estimation being at least one of a physics-based friction estimation (PFE), a machine learning friction estimation (MLFE), and a combination of the physics-based friction estimation (PFE) and the machine learning friction estimation (MLFE), of the friction between the road surface and the tire of the wheel.

14. Vehicle comprising an electronic control unit (ECU) according to claim 13.
